# EUROPÄISCHE PATENTSCHRIFT

(11) **EP 3 641 084 B1**
(45) Veröffentlichungstag und Bekanntmachung des Hinweises auf die Patenterteilung: **16.02.2022**
(21) Anmeldenummer: 18201258.3
(22) Anmeldetag: 18.10.2018
(51) Int. Cl.: H02G 3/32, F16L 3/223

(54) **KABELFÜHRUNGSVORRICHTUNG UND KABELFÜHRUNGSSYSTEM**
CABLE GUIDE DEVICE AND CABLE GUIDE SYSTEM
DISPOSITIF DE GUIDAGE DE CÂBLE ET SYSTÈME DE GUIDAGE DE CÂBLE

(43) Veröffentlichungstag der Anmeldung: 22.04.2020
(73) Patentinhaber: Lapp Engineering AG, 6330 Cham (CH)
(72) Erfinder: DROTLEFF, Rolf, 75932 Deckenpfron (DE); BAUER, Andreas, 70193 Stuttgart (DE); WEGERER, Matthias, 6330 Cham (CH)
(74) Vertreter: Rutz & Partner

(56) Entgegenhaltungen:
- DE-U1-202008 002 786
- JP-A- H08 308 984
- JP-A- 2016 039 668
- US-A1- 2004 050 583
- US-A1- 2007 246 613
- US-A1- 2012 175 470

## Beschreibung

Die Erfindung betrifft eine Kabelführungsvorrichtung sowie ein Kabelführungssystem zur geordneten Führung von Kabeln und flexiblen Leitungen insbesondere in Produktionsbetrieben der Nahrungsmittelindustrie und der pharmazeutischen Industrie.

Aus dem Stand der Technik sind diverse Kabelkanäle und Kabelpritschen zur Führung einer Vielzahl von Kabeln bekannt. Nachteilig an Kabelkanälen und Kabelpritschen ist, dass die einzelnen Kabel nur schwer zugänglich sind. Zudem ist eine Reinigung im Inneren der Kabelkanäle und Kabelpritschen nur mit grossem Aufwand möglich.

Aus der DE202012001760U1 ist eine Kabelführung aus gelenkig miteinander verbundenen Gliedern bekannt. Die einzelnen Glieder müssen zum Einlegen des Kabels mit einem Werkzeug geöffnet und wieder verschlossen werden, was zeitaufwendig ist und ein Werkzeug erfordert. Zudem ist eine grosse Anzahl feingliedriger Gelenkvorrichtungen und Verschlussvorrichtungen erforderlich, die nach längerem Betrieb und mehrfacher Benutzung Verschleisserscheinungen und weitere Mängel aufweisen können. Die Kabelführung erfordert aufgrund der zahlreichen Gelenkvorrichtungen und Verschlussvorrichtungen zudem einen hohen Herstellungsaufwand. Ferner benötigen die Gelenkvorrichtungen und Verschlussvorrichtungen, insbesondere wenn sie der Witterung ausgesetzt sind, einen relativ hohen Wartungsaufwand, damit sie über eine lange Betriebsdauer zuverlässig arbeiten. Insbesondere in Produktionsbereichen der Nahrungsmittelindustrie und der pharmazeutischen Industrie, in denen eine hohe Reinheit gefordert ist, haben feingliedrige Gelenkvorrichtungen und Verschlussvorrichtungen ferner den Nachteil, dass sie nur mit grossem Aufwand gründlich gereinigt werden können. Ein Einsatz solcher Vorrichtungen ist in diesen Bereichen daher in Frage gestellt.

Die US2007/246613A1 offenbart eine Vorrichtung für das Kabelmanagement und zur Zugentlastung mit einem Grundkörper aus einem flexiblen Material, an dessen Peripherie mehrere diskrete Löcher vorgesehen sind, die der Aufnahme von Kabeln dienen.

Die DE202008002786U1 offenbart einen Kabelhalter für mehrsträngige Kabel mit einem zentralen Befestigungsorgan, um das mehrere Aufnahmen für Kabelstränge sternförmig angeordnet sind. Die Kabelaufnahmen weisen eine Öffnung und eine Führungsschiene auf.

Die US2004/050583A1 offenbart einen Kabelseparator zur Halterung von Kabeln in Bündeln, der einen Innenkörper mit einer Vielzahl von Öffnungen aufweist. Nach dem Einführen der Kabel durch die Öffnungen, werden diese durch Rotation eines Aussenkörpers radial verschlossen.

Die US2012/175470A1 offenbart ein Kabelmanagementsystem mit einer flexiblen Spindel und einer Vielzahl an Stützelementen, die je aus einem einzigen Drahtstück geformt sind.

Der Erfindung liegt daher die Aufgabe zu Grunde, eine verbesserte Kabelführungsvorrichtung sowie ein verbessertes Kabelführungssystem mit solchen Kabelführungsvorrichtungen zu schaffen.

Die Kabelführungsvorrichtungen sollen kostengünstig herstellbar, einfach und robust aufgebaut und dadurch witterungsbeständig und weitgehend verschleissfrei sein.

Die Kabelführungsvorrichtung soll einfach bedienbar sein und die eingelegten Kabel sicher erhalten. Die Kabel sollen leicht einführbar und auch wieder entnehmbar sein. Dabei sollen Kabel mit unterschiedlichen Durchmessern installiert werden können.

Ferner soll die Kabelführungsvorrichtung praktisch keinen Unterhalt erfordern und im Falle einer Verunreinigung einfach und vollständig gereinigt werden können, sodass sie für den Einsatz in Produktionsbereichen der Nahrungsmittelindustrie und der pharmazeutischen Industrie geeignet ist.

Die Kabelführungsvorrichtung soll ferner vorteilhaft montierbar sein und auch die Durchführung von Kabeln durch eine Trennwand vorteilhaft erlauben.

Kabel sollen geordnet verlegt werden können, wobei Interferenzen zwischen einzelnen Kabeln nach Möglichkeit ausgeschlossen werden.

Mittels der verbesserten Kabelführungsvorrichtungen soll zudem ein verbessertes Kabelführungssystem geschaffen werden, welches mit geringem Aufwand aufgebaut und über lange Zeit praktisch ohne Wartungsaufwand insbesondere in den genannten Produktionsbereichen betrieben werden kann. Das Kabelführungssystem soll in einem Gebäude entlang beliebigen Kurven, gegebenenfalls durch Trennwände durchgeführt, mit geringem Aufwand installierbar sein.

Diese Aufgabe wird mit einer Kabelführungsvorrichtung und einem Kabelführungssystem, gelöst welche die in Anspruch 1, bzw. Anspruch 8, angegebenen Merkmale aufweisen. Vorteilhafte Ausgestaltungen der Erfindung sind in weiteren Ansprüchen angegeben.

Die Kabelführungsvorrichtung, die der gerichteten Führung von Kabeln insbesondere in Produktionsbereichen der Getränke- und/oder Lebensmittelindustrie oder der pharmazeutischen Industrie dient, umfasst zumindest zwei Stege, die radial zu einem Zentralteil ausgerichtet sind und ein mit dem Zentralteil verbundenes erstes Endstück sowie ein zweites Endstück aufweisen, an dem ein Rückhalteflügel vorgesehen ist, welcher sich in Richtung zum benachbarten Rückhalteflügel erstreckt.

Erfindungsgemäss ist vorgesehen, dass jeder Rückhalteflügel am zweiten Endstück des zugehörigen Stegs einstückig angeformt und beidseits je durch eine Segmentöffnung von den benachbarten Stegen oder deren Rückhalteflügel getrennt ist und dass zwei benachbarte Stege und ein oder zwei zugehörige Rückhalteflügel je eine Kabelaufnahmeöffnung begrenzen, die zur Aufnahme von Kabeln vorgesehen ist.

Die erfindungsgemässe Kabelführungsvorrichtung verzichtet auf Gelenkvorrichtungen und kann daher einfach und robust aufgebaut werden. Die Kabelführungsvorrichtung wird z.B. aus widerstandsfähigem Kunststoff gefertigt, der eine einwandfreie Funktion der Kabelführungsvorrichtung auch nach langem Betrieb gewährleistet.

Die Kabelführungsvorrichtung ist vorzugsweise zumindest teilweise aus Kunststoff gefertigt. Hierdurch wird eine leichte Bauform ermöglicht. Vorzugsweise wird ein Kunststoff verwendet, der den Stegen und/oder den Rückhalteflügeln eine Elastizität verleiht, die es erlaubt, die Kabelaufnahmeöffnung zu öffnen und Kabel mit unterschiedlichem Durchmesser durch die Segmentöffnung in die Kabelaufnahmeöffnung einzuführen und wieder zu entnehmen. Die Rückhalteflügel werden vorzugsweise aus einem Material gefertigt, das eine Elastizität aufweist, die grösser ist als die Elastizität des Materials der Stege. Auf diese Weise erhalten die Stege eine erhöhte Tragkraft, während die Rückhalteflügel einfacher gebogen werden können, um grössere Kabel in die Kabelaufnahmeöffnung einzuführen. Die Segmentöffnung kann für die Kabel daher praktisch geschlossen sein und mit einem Handgriff geöffnet werden, um das Kabel einzulegen.

Alle Stege und Rückhalteflügel weisen vorzugsweise je dieselbe Elastizität und dieselben Dimensionen auf. In bevorzugten Ausgestaltungen kann hingegen vorgesehen werden, weisen die einzelnen Stege und Rückhalteflügel hingegen unterschiedliche Dimensionen und/oder Elastizität bzw. Fertigungsmaterial auf und sind an bestimmte Kabeltypen angepasst. Dadurch können Kabelaufnahmeöffnungen vorgesehen werden, die z.B. Glasfaserkabel und/oder Netzwerkkabel und/oder Stromversorgungskabel und/oder Medienleitungen aller Art individuell aufnehmen können. Durch entsprechende Farbgebung können die einzelnen Kabelaufnahmeöffnungen gekennzeichnet werden (z.B. rot für Stromversorgung und grün für Netzwerkkabel). Auf diese Weise können Kabel geordnet verlegt und Interferenzen vermieden werden.

Vorzugsweise ist die Kabelführungsvorrichtung zumindest teilweise mit einer selbstreinigenden und/oder einer easy-toclean Beschichtung überzogen. Hierdurch wird die Reinigbarkeit verbessert.

Die erfindungsgemässe Kabelführungsvorrichtung und mit erfindungsgemässen Kabelführungsvorrichtungen aufgebaute Kabelführungssysteme haben aufgrund des einfachen und robusten Aufbaus die insbesondere in Produktionsbereichen der Lebensmittelindustrie oder der pharmazeutischen Industrie die geforderte Eigenschaft, dass sie rasch und gründlich gereinigt werden können. Die Kabel können während Reinigungsvorgängen einfach und schnell aus der Kabelaufnahmeöffnung entnommen werden, um die Kabelführungsvorrichtungen und auch die Kabel vollständig zu reinigen.

In einer bevorzugten Ausgestaltung ist vorgesehen, dass sich die Endstücke der Rückhalteflügel ausgehend vom zugehörigen Steg mit gleicher oder unterschiedlicher Länge auf entgegengesetzte Seiten erstrecken und je mit dem zugehörigen Endstück des benachbarten Rückhalteflügels eine Segmentöffnung begrenzen. Die Rückhalteflügel können in dieser Ausgestaltung auch nicht durchgehend ausgeführt sein, sodass deren Endstücke als in entgegengesetzte Richtungen weisende Rückhalteflügel erscheinen.

Die Kabelaufnahmeöffnung wird in dieser Ausgestaltung durch benachbarte Stege und die daran angeformten Endstücke der Rückhalteflügel begrenzt. Eines oder mehrere Kabel sind durch die Segmentöffnung in die Kabelaufnahmeöffnung einführbar. Hierzu wird die Segmentöffnung durch leichten Druck per Hand, oder durch Druck auf das Kabel so weit aufgeweitet, dass das Kabel durch die Segmentöffnung hindurchführbar ist. Die Aufweitung der Segmentöffnung wird durch eine Elastizität der Rückhalteflügel und/oder der Stege ermöglicht.

Vorteilhafterweise ist ein Werkzeug für die Bedienung der Kabelführungsvorrichtung nicht erforderlich.

In einer weiteren bevorzugten Ausgestaltung ist an der Kabelführungsvorrichtung eine Halterung angeformt. Über die Halterung ist die Kabelführungsvorrichtung an einer Wand, einer Decke, einem Gehäuse, einer Montagevorrichtung, einer Maschine oder einer sonstigen Oberfläche befestigbar. Hierdurch wird eine präzise und stabile Führung der in der Kabelführungsvorrichtung geführten Kabel ermöglicht.

In einer weiteren Ausgestaltung weist die Halterung ein Abstandselement auf. Durch das Abstandselement wird die Distanz zwischen der Kabelführungsvorrichtung und der Wand bzw. der Montagefläche erhöht, so dass die Kabel einfach zugänglich bleiben. Zudem wird die Zugänglichkeit bei Reinigungsvorgängen verbessert. Vorzugsweise geht das Abstandselement einstückig über einen Übergangsflansch in einen Steg der Kabelführungsvorrichtung über.

Erfindungsgemäss weist das Zentralteil eine Durchführöffnung zur Durchführung eines Verbindungselements auf, mittels dessen mehrere Kabelführungsvorrichtungen miteinander verbindbar sind. Mittels des Verbindungselements können Kabelführungsvorrichtungen daher in einfacher Weise in einem Raum montiert werden.

Erfindungsgemäss weist die Durchführöffnung mehrere Dichtrillen auf. Die Dichtrillen sind vorzugsweise entlang der Achse der Durchführöffnung angeordnet und umfassen das durchgeführte Verbindungselement eng. Hierdurch wird das Verbindungselement mechanisch fixiert.

Erfindungsgemäss ist anschliessend an die Durchgangsöffnung eine angeformte Dichtung vorgesehen. Die Dichtung, die vorzugsweise elastisch ausgestaltet ist, verhindert das Eindringen von Flüssigkeit und Schmutz in die Durchgangsöffnung. Hierdurch wird die Akkumulation von Schmutz oder Bakterien an schlecht oder nicht zugänglichen Stellen verhindert. Dies ermöglicht wiederum die Anwendung der Kabelführungsvorrichtung in Bereichen, in denen hohe Anforderungen an die Raumreinheit gestellt werden. Vorzugsweise ist die Kabelführungsvorrichtung zumindest annähernd scheibenförmig oder rotorförmig ausgestaltet. Hierdurch wird eine kompakte Aufbewahrung und Lagerung ermöglicht.

Die benachbarten Stege schliessen vorzugsweise gleiche Winkel ein, sodass die Kabel gleichmässig über die gesamte Kabelführungsvorrichtung verteilt werden können und eine gleichmässigere Belastung der Stege und Rückhalteflügel resultiert.

Die Rückhalteflügel sind erfindungsgemäss zumindest annähernd entlang einer Kreislinie ausgerichtet, die zumindest annähernd konzentrisch zum Zentralteil oder zur Durchführungsöffnung verläuft. Hierdurch wird eine kompakte Bauform ermöglicht.

Erfindungsgemäss ist vorgesehen, dass die Segmentöffnung schlitzförmig ausgebildet und gegenüber der Längsachse der Kabelführungsvorrichtung und der installierten Kabel um einen Winkel geneigt ist, der vorzugsweise in einem Bereich von zumindest annähernd 30° - 60°, weiter bevorzugt etwa bei 45° liegt. Auf diese Weise können sich die Kabel nicht selbsttätig von der Kabelführungsvorrichtung lösen. Die Kabel müssen entsprechend dem Neigungswinkel gedreht werden, um diese durch die Segmentöffnung heraus zu führen. Die normalerweise axial ausgerichteten Kabel bleiben daher in der Kabelaufnahmeöffnung gehalten.

In einer weiteren vorzugsweisen Ausgestaltung ist vorgesehen, dass die Stege und die daran anschliessenden vorzugsweise federelastischen Rückhalteflügel drahtförmig ausgebildet sind, wobei das vom zugehörigen Steg abgewandte erste Endstück des Rückhalteflügels das zweite Endstück des benachbarten Stegs oder das zweite Endstück des benachbarten Rückhalteflügels derart überlappt, dass dazwischen die Segmentöffnung resultiert. Die Kabelführungsvorrichtung in dieser Ausgestaltung kann vorteilhaft aus Metall gefertigt werden. Sofern Metall verwendet wird, sind die Stege und/oder die Rückhalteflügel vorzugsweise federelastisch ausgebildet, sodass sie gebogen werden können, um die Kabel einzulegen, wonach sich die Segmentöffnung wieder selbsttätig schliesst.

In einer weiteren bevorzugten Ausgestaltung ist vorgesehen, dass die Rückhalteflügel einen Verschlussring mit einer Ringöffnung drehbar halten, die wahlweise über eine der Segmentöffnungen zwischen den Rückhalteflügeln drehbar ist. Nach der Installation der Kabel wird der Verschlussring derart gedreht, dass die Ringöffnung über einem Rückhalteflügel liegt oder nach oben ausgerichtet ist, sodass die Kabelaufnahmeöffnungen verschlossen sind und die installierten Kabel sich nicht selbsttätig von der Kabelführungsvorrichtung lösen können. Die Rückhalteflügel und der Verschlussring sind vorzugsweise mit Formelementen versehen, die formschlüssig ineinander eingreifen. Die Rückhalteflügel weisen z.B. eine nach aussen gerichtete Halterippe auf, die in eine nach innen gerichtete Haltenut am Verschlussring eingreift. Der Verschlussring ist daher auf den Rückhalteflügeln oder Elementen des Stegs drehbar gehalten.

In einer weiteren vorzugsweisen Ausgestaltung weist die Kabelführungsvorrichtung zwei vorzugsweise identische Vorrichtungssegmente auf, welche die Merkmale einer der vorstehend beschriebenen Kabelführungsvorrichtungen aufweisen und die gleichsinnig oder gegensinnig koaxial zueinander ausgerichtet zwischen wenigstens einer ersten und einer zweiten Drehlage gegeneinander drehbar gehalten sind, so dass die Segmentöffnungen der beiden Vorrichtungssegmente in der ersten Drehlage nebeneinander liegen und dadurch geöffnet sind und in der zweiten Drehlage neben einem Rückhalteflügel des benachbarten Vorrichtungssegments liegen und dadurch verschlossen sind.

Die Rückhalteflügel können wiederum mit gleich langen oder ungleich langen Endstücken versehen sein. Sofern ungleich lange Endstücke vorgesehen sind werden die Vorrichtungssegmente vorzugsweise derart angeordnet, dass die längeren Endstücke der Rückhalteflügel in entgegengesetzte Richtungen weisen. Auf diese Weise kann die Grösse der Kabelaufnahmeöffnungen maximiert werden. Durch gegenseitige Drehungen der Vorrichtungssegmente können die Segmentöffnungen daher geöffnet oder verschlossen werden. Sofern zwei identische Vorrichtungssegmente miteinander kombiniert werden, kann die resultierende Kabelführungsvorrichtung mit geringen Kosten hergestellt werden.

Mit einer oder vorzugsweise mehreren erfindungsgemässen Kabelführungsvorrichtungen ist ein erfindungsgemässes Kabelführungssystem vorteilhaft realisierbar. Die einzelnen Kabelführungsvorrichtungen können durch ein Verbindungselement oder durch mehrere Verbindungselemente, welche vorzugsweise als Rohr oder Stab ausgestaltet sind, in einfacher Weise stabil miteinander verbunden werden. Die Verbindungselemente sind jeweils durch die Durchführöffnungen der Kabelführungsvorrichtungen hindurch geführt. Die einzelnen Kabelführungsvorrichtungen werden durch die Verbindungselemente in Position gehalten, wodurch eine präzise Führung der installierten Kabel ermöglicht wird. Bezüglich der Linienführung gibt es keine Einschränkungen. Die Verbindungselemente können, auch abwechslungsweise, entlang von Geraden und Kurven verlaufen.

In weiteren bevorzugten Ausgestaltungen ist vorgesehen, dass die Kabelhaltevorrichtung in einer Trennwand oder in einem Rahmen gehalten und vorzugsweise verankert werden kann. Die erfindungsgemässe Kabelführungsvorrichtung erlaubt es daher auch Kabel geordnet in Geräte oder Räume einzuführen.

In bevorzugten Ausgestaltungen sind die Kabelführungsvorrichtungen von den Halterungen entkoppelbar, sodass sie zur Reinigung abgenommen werden können. Die Halterungen können z.B. gabelartig ausgestaltet sein, sodass sie das Zentralteil der Kabelführungsvorrichtung oder das Verbindungselement lösbar umklammern können. Das Zentralteil entspricht z.B. einer zylindrisch ausgebildeten Nabe, die von der Halterung erfasst werden kann. Das Zentralteil wird dazu vorzugsweise verlängert.

In einer bevorzugten Ausgestaltung ist das zumindest eine Verbindungselement durch zumindest eine Halterung mit einer Wand, einer Decke, einer Wandung oder dem Gehäuse einer Maschine verbunden. Hierdurch wird das Kabelführungssystem mechanisch stabil verankert und die Tragekraft für die geführten Kabel aufgebracht. In vorzugsweisen Ausgestaltungen ist die Halterung einstückig mit der Kabelführungsvorrichtung, gegebenenfalls mit einem der Stege verbunden.

Vorzugsweise weist das Kabelführungssystem in regelmässigen oder unregelmässigen Abständen erfindungsgemässe Kabelführungsvorrichtungen auf. Vorzugsweise liegt der durchschnittliche Abstand zwischen den Kabelführungsvorrichtungen im Bereich von wenigstens 20cm bis 2m. Bevorzugte Abstände sind z.B. 30cm, 50cm und 100cm. Der Abstand wird vorzugsweise unter Berücksichtigung der Festigkeit, des Gewichts und/oder der Belastbarkeit der eingelegten Kabel festgelegt.

Nachfolgend wird die Erfindung anhand von Zeichnungen näher erläutert. Dabei zeigt:
- Fig. 1: ein erfindungsgemässes Kabelführungssystem 9 mit erfindungsgemässen Kabelführungsvorrichtungen 1, 1', J Halterungen 3, 3` und installierten Kabeln 81, 82, 83 in schematische Darstellung;
- Fig. 2a: eine Halterung 3 für das Kabelführungssystem 9 von Fig. 1;
- Fig. 2b: eine der erfindungsgemässen Kabelführungsvorrichtungen 1 von Fig. 1, die radial zu einem Zentralteil 10 ausgerichtete Stege 12 aufweist, die mit einem ersten Endstück 121 mit dem Zentralteil 10 verbunden sind und an deren zweitem Endstück 122 je ein Rückhalteflügel 13 einstückig angeformt ist, der beidseits je durch eine Segmentöffnung 14 von den benachbarten Stegen 12 oder deren Rückhalteflügel 13 getrennt ist;
- Fig. 3: eine erfindungsgemässe Kabelführungsvorrichtung 1' von Fig. 2b mit einer Halterung 3', die ein Abstandselement 32 aufweist, das durch einen Steg 12 zum Zentralteil 10 der Kabelführungsvorrichtung 1' verläuft;
- Fig. 4a: eine erfindungsgemässe Kabelführungsvorrichtung 1A in einer bevorzugten Ausgestaltung, bei der die Segmentöffnungen 14 zur Längsachse x der Kabelführungsvorrichtung 1A geneigt sind und die Rückhalteflügel 13 entlang einer Kreisbahn verlaufen;
- Fig. 4b: eine erfindungsgemässe Kabelführungsvorrichtung 1B in einer bevorzugten Ausgestaltung, bei der die Segmentöffnungen 14 zur Längsachse x der Kabelführungsvorrichtung 1B geneigt sind und die Rückhalteflügel 13 ein Oktagon definieren;

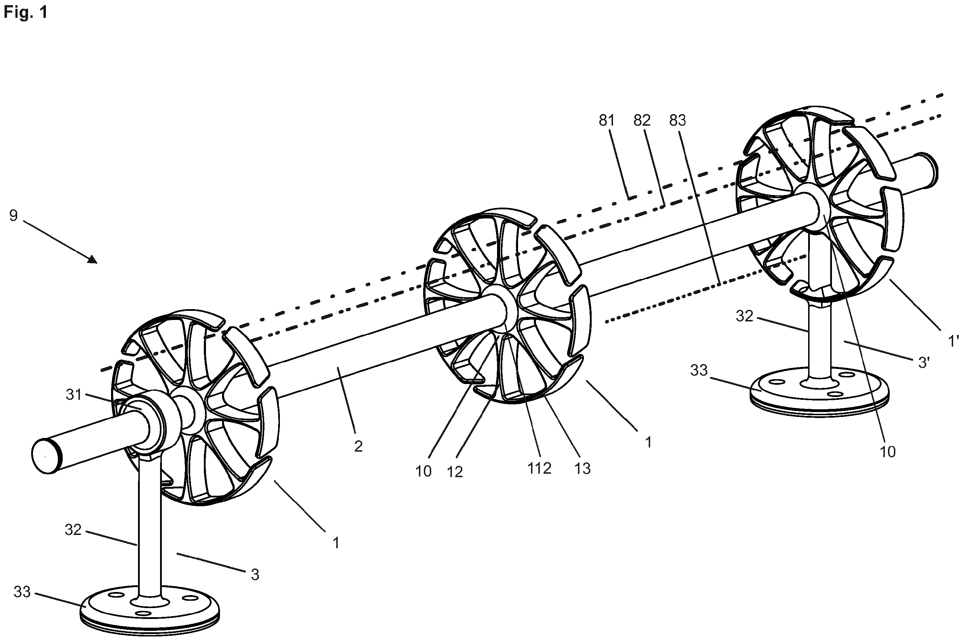

Fig. 1 zeigt ein erfindungsgemässes Kabelführungssystem 9 mit erfindungsgemässen Kabelführungsvorrichtungen 1,1' , die durch ein Verbindungselement 2 miteinander verbunden sind und die von zwei Halterungen 3, 3' getragen sind. Im Kabelführungssystem 9 sind schematisch dargestellte Kabel 81, 82, 83 installiert. Die Halterung 3 bzw. 3' ist in 2 Ausführungen gezeigt. In einer ersten Ausführung ist die Halterung 3 mit dem stabförmigen Verbindungselement 2 verbunden. In einer zweiten Ausgestaltung ist die Halterung 3' mit einer vorzugsweise ausgestalteten Kabelführungsvorrichtung 1' einstückig verbunden. Das Verbindungselement 2 ist durch eine Haltering 31 der ersten Halterung 3 durchgeführt und von dieser gehalten. Jede der Kabelführungsvorrichtungen 1, 1' weist radial zu einem Zentralteil 10 ausgerichtete Stege 12 auf, an denen Rückhalteflügel 13 angeformt sind. Jedes Zentralteil 10 weist eine durch Durchführöffnung auf, durch die das Verbindungselement 2 in durchgeführt ist. Die Kabel 81, 82, 83 sind durch die Kabelführungsvorrichtungen 1, 1' hindurch und parallel zum Verbindungselement 2 geführt.

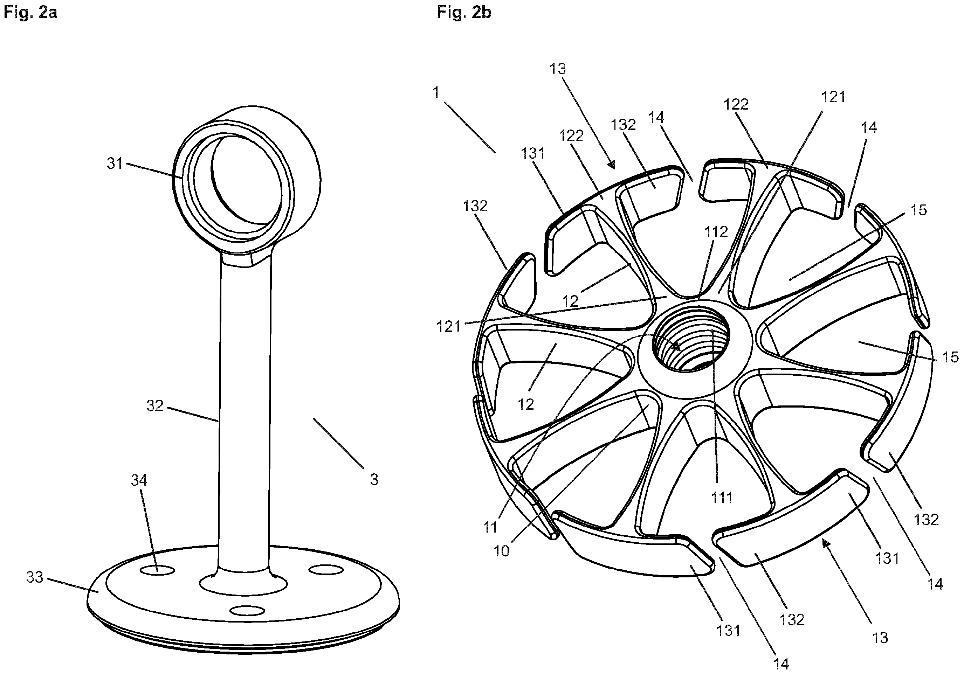

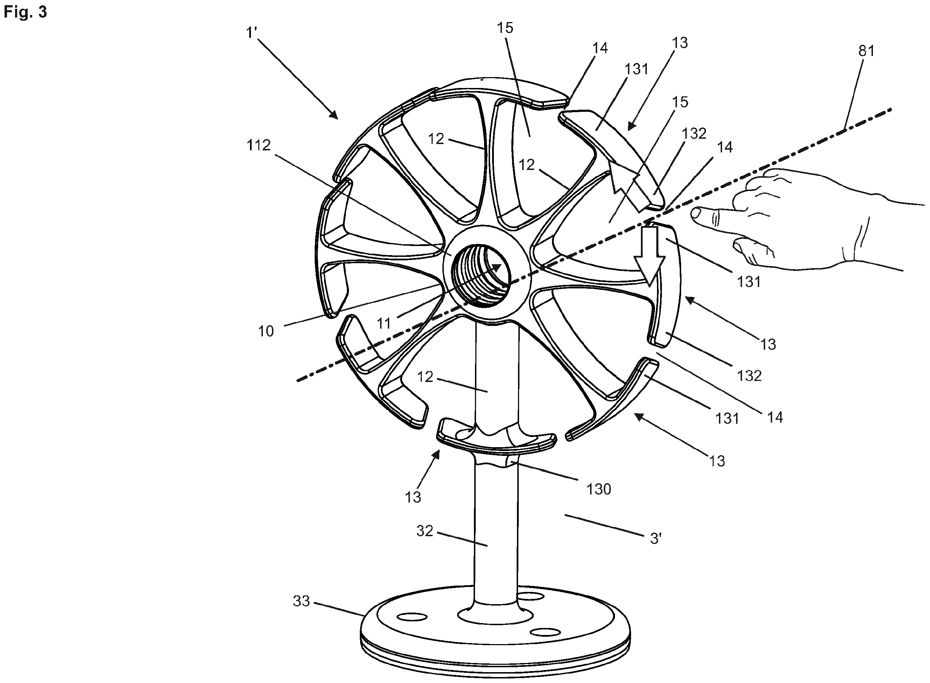

Die Elemente des Kabelführungssystems 9 von Fig. 1 werden nachstehend mit Bezug auf die Figuren 2a, 2b und 3 näher erläutert.

Fig. 2a zeigt die erste Halterung 3 des Kabelführungssystems 9 von Fig. 1. Die Halterung 3 umfasst einen Haltering 31 mit einer Durchführöffnung zur Durchführung des Verbindungselements 2. Der Haltering 31 ist über ein Abstandselement 32 mit einem Montageflansch 33 verbunden. Am Montageflansch 33 sind mehrere Montageöffnungen 34 vorgesehen, durch die Befestigungsmittel wie Schrauben oder Dübel durchführbar sind, um die Halterung 3 mit einer Wand oder einer Decke oder einem weiteren Montagekörper zu verbinden.

Fig. 2b zeigt eine der Kabelführungsvorrichtungen 1 von Fig. 1. Die Kabelführungsvorrichtung 1 umfasst acht radial ausgerichtete Stege 12, die mit einem ersten Endstück 121 einstückig mit einem Zentralteil 10 verbunden sind. Die benachbarten Stege 12 schliessen gleichgrosse Winkel ein und sind somit gleichmässig um das Zentralteil 10 verteilt. An den zweiten Endstücken 122 der Stege 12 sind Rückhalteflügel 13 mit Endstücken 131, 132 angeformt, die ausgehend von den zweiten Endstücken 122 der Stege 12 in entgegengesetzte Richtungen weisen. Die Endstücke 131, 132 der Rückhalteflügel 13 benachbarter Stege 12 sind jeweils paarweise gegeneinander gerichtet wobei eine Segmentöffnung 14 zwischen den Rückhalteflügeln 13 begrenzt wird. Durch benachbarte Stege 12 und ein Paar von Rückhalteflügeln 13 ist jeweils eine Kabelaufnahmeöffnung 15 umschlossen.

Das Zentralteil 10 weist die Form einer Nabe auf und ist mit einer Durchführöffnung 11 versehen. Durch die Durchführöffnung 11 ist das Verbindungselement 2 aus Fig. 1 durchführbar. In der Durchführöffnung 11 sind Dichtrillen 111 angeordnet, mittels denen die Kabelführungsvorrichtung 1 dicht abgeschlossen mit dem Verbindungselement 2 verbindbar ist. An der Durchführöffnung 11 ist eine Dichtung 112 angeformt, durch die verhindert wird, dass Schmutz in die Durchführöffnung 11 eindringen kann.

Fig. 3 zeigt die vorzugsweise ausgestaltete Kabelführungsvorrichtung 1' von Fig. 1, die im Wesentlichen der Kabelführungsvorrichtung 1 von Fig. 2b entspricht, bei der die Halterung 3' jedoch angeformt ist. Das Abstandsteil 32 bildet gleichzeitig einen der acht Stege 12 und geht durch einen Übergangsflansch 130, der einen Rückhalteflügel 13 hält, in diesen Steg 12 über. Am Abstandselement 32 ist ein z.B. an einer Wand oder einer Decke montierbar Montageflansch 33 angeformt.

Ein Kabel 81 wird durch die Segmentöffnung 14 eingeführt, wobei die Segmentöffnung 14 durch Auslenkung der Stege 12 in Pfeilrichtung und/oder Deformation der Rückhalteflügel 13 bzw. der Endstücke 131, 132 der Rückhalteflügel 13 vergrösserbar ist. Die Auslenkung ist durch eine entsprechend gewählte Elastizität der Rückhalteflügel 13 und der Stege 12 möglich.

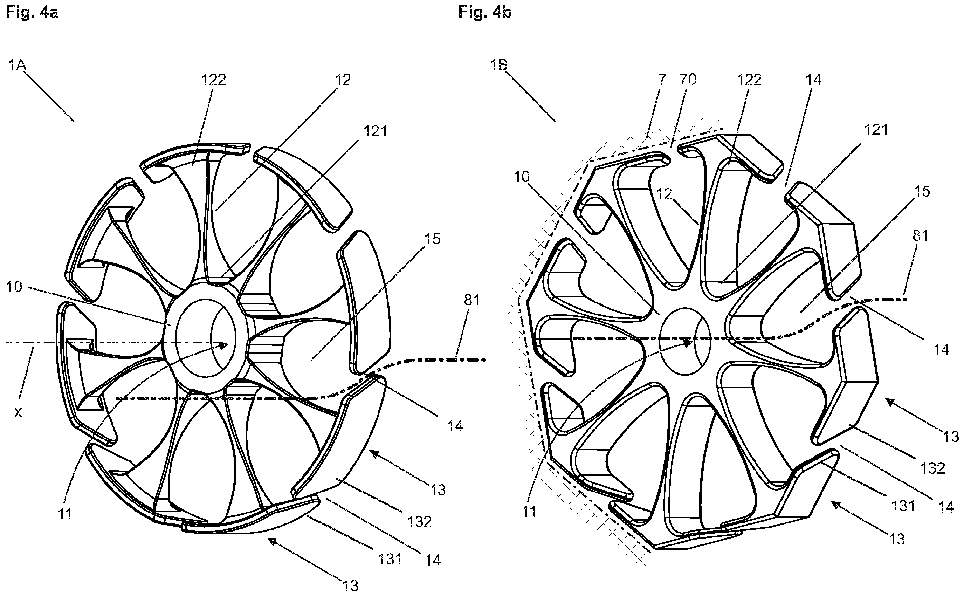

Fig. 4a zeigt eine erfindungsgemässe Kabelführungsvorrichtung 1A in einer weiteren bevorzugten Ausgestaltung. Die Kabelführungsvorrichtung 1A weist im Wesentlichen die Merkmale der Kabelführungsvorrichtung 1 von Fig. 2b auf. Die Endstück 131, 132 der Rückhalteflügel 13 sind jedoch in Bezug zur Längsachse x zumindest annähernd um 45° geneigt. Die durch die Endstücke 131, 132 begrenzten Segmentöffnungen 14 verlaufen daher auch etwa um 45° geneigt zur Längsachse x der Kabelführungsvorrichtung 1A. Wie dies in Fig. 4a illustriert ist, kann das Kabel 81 nur in die Kabelaufnahmeöffnung 15 eingelegt werden, indem es entsprechend dem Neigungswinkel gedreht wird. Anschliessend wird das Kabel 81 durch Krafteinwirkung wieder axial ausgerichtet und kann somit durch die Segmentöffnung 14 nicht mehr entweichen. Der Neigungswinkel wird vorzugsweise entsprechend der Festigkeit der Kabel gewählt. Für sehr elastische Kabel 81 kann ein sehr grosser Neigungswinkel von z.B. 60° gewählt werden. Für steifere Kabel 81 genügt normalerweise ein Neigungswinkel von 30°. In der Regel ist ein Neigungswinkel von 45° ideal.

Bei der Ausgestaltung der Kabelführungsvorrichtung 1A von Fig. 4a verlaufen die Rückhalteflügel 13 entlang einer Kreisbahn die konzentrisch zur Durchführungsöffnung 15 bzw. zum Zentralteil 10 ist.

Fig. 4b zeigt eine erfindungsgemässe Kabelführungsvorrichtung 1B in einer weiteren bevorzugten Ausgestaltung, bei der die Segmentöffnungen 14 zur Längsachse x der Kabelführungsvorrichtung 1B geneigt sind und die Rückhalteflügel 13 ein Polygon, vorliegend ein Oktagon definieren.

Die Form der Rückhalteflügel 13 ist vorzugsweise derart gewählt, dass die Kabelführungsvorrichtung 1A, 1B in eine Durchtrittsöffnungen 70 in einer Trennwand 7 eines Gebäudes oder einer Vorrichtung oder in einem Montagerahmen 7 lösbar einsetzbar ist (in Fig. 4b schematisch gezeigt). Die Kabelführungsvorrichtung 1A, 1B kann aus der Trennwand 7 oder den Montagerahmen 7 entnommen werden, um ein Kabel 81 aufzunehmen und durch die Trennwand 7 oder den Montagerahmen 7 hindurch zu führen. Durch entsprechende Formgebung der Rückhalteflügel 13 oder durch Anformung von Ankerelementen, vorzugsweise Rastelementen, an den Aussenseiten der Rückhalteflügel 13 (siehe z.B. die Halterippe 139 in Fig. 5b) kann die Kabelführungsvorrichtung 1A, 1B lösbar in der Trennwand 7 oder im Montagerahmen 7 verankert werden.

### Bezugszeichenliste

- 1, 1', 1A, 1B: Kabelführungsvorrichtung
- 10: Zentralteil
- 101: zylindrische Erweiterung
- 11: Durchführöffnung im Zentralteil 10
- 111: Dichtrillen
- 112: Dichtung
- 12: Steg
- 121: erstes Endstück
- 122: zweites Endstück
- 13: Rückhalteflügel
- 130: Übergangsflansch
- 131: erstes Endstück des Rückhalteflügels 13
- 132: zweites Endstück des Rückhalteflügels 13
- 139: Halterippe
- 14: Segmentöffnung
- 15: Kabelaufnahmeöffnung
- 16: Verschlussring
- 164: Ringöffnung
- 169: Haltenut
- 2: Verbindungselement
- 3, 3': Halterung
- 31: Haltering mit Durchführöffnung
- 32: Abstandselement
- 33: Montageflansch
- 34: Montageöffnungen
- 7: Trennwand, Montagerahmen
- 70: Durchtrittsöffnung
- 81, 82, 83: Kabel
- 9: Kabelführungssystem
- x: Längsachse der Kabelführungsvorrichtung

## Patentansprüche

1. Kabelführungsvorrichtung (1,1',1A,1B) zur gerichteten Führung von Kabeln (81, 82, 83) insbesondere für Produktionsbereiche der Getränke- und/oder Lebensmittelindustrie, mit zumindest zwei Stege (12), die radial zu einem Zentralteil (10) ausgerichtet sind und ein mit dem Zentralteil (10) verbundenes erstes Endstück (121) sowie ein zweites Endstück (122) aufweisen, an dem ein Rückhalteflügel (13) vorgesehen ist, welcher sich in Richtung zum benachbarten Rückhalteflügel (13) erstreckt, wobei
die Rückhalteflügel (13) zumindest annähernd entlang einer Kreislinie ausgerichtet sind, die zumindest annähernd konzentrisch zum Zentralteil (10) verläuft und wobei
jeder Rückhalteflügel (13) am zweiten Endstück (122) des zugehörigen Stegs (12) einstückig angeformt und beidseits je durch eine Segmentöffnung (14) von den benachbarten Stegen (12) oder deren Rückhalteflügel (13) getrennt ist und wobei
zwei benachbarte Stege (12) und ein oder zwei zugehörige Rückhalteflügel (13) je eine Kabelaufnahmeöffnung (15) begrenzen, die zur Aufnahme von Kabeln (81, 82, 83) vorgesehen ist und wobei
die Segmentöffnung (14) schlitzförmig ausgebildet und gegenüber der Längsachse (x) der Kabelführungsvorrichtung (1) um einen Winkel geneigt ist, der vorzugsweise in einem Bereich von zumindest annähernd 30° - 60°, weiter bevorzugt etwa bei 45° liegt und wobei
das Zentralteil (10) eine Durchführöffnung (11) zur Durchführung eines Verbindungselements (2) aufweist, mittels dessen mehrere Kabelführungsvorrichtungen (1,1',1A,1B) miteinander verbindbar sind, wobei angrenzend an die Durchführöffnung Dichtungselemente, welche als angeformte Dichtrillen (111) und eine angeformte Dichtung (112) ausgestaltet sind, vorgesehen sind.

2. Kabelführungsvorrichtung (1,1',1A,1B) nach Anspruch 1, **dadurch gekennzeichnet, dass** an den Rückhalteflügeln (13) Endstücke (131, 132) angeformt sind, die sich ausgehend vom zugehörigen Steg (12) mit gleicher oder unterschiedlicher Länge auf entgegengesetzte Seiten erstrecken und je mit dem zugehörigen Endstück (132; 131) des benachbarten Rückhalteflügels (13) die Segmentöffnung (14) begrenzen.

3. Kabelführungsvorrichtung (1,1',1A,1B) nach Anspruch 1 oder 2,
**dadurch gekennzeichnet, dass** eine Halterung (3, 3'), die an einem Montagekörper, wie einer Wand, einer Decke, einem Gehäuse oder einer Montagevorrichtung montierbar ist, mit der Kabelführungsvorrichtung (1,1',1A,1B) verbunden ist, die vorzugsweise ein Abstandselement (32) aufweist, welches vorzugsweise einstückig mit einem der Stege (12) verbunden ist.

4. Kabelführungsvorrichtung (1,1',1A,1B) nach einem der Ansprüche 1 - 3, **dadurch gekennzeichnet, dass** die vorzugsweise mit einer Beschichtung überzogene Kabelführungsvorrichtung (1,1',1A,1B) zumindest annähernd scheibenförmig ausgestaltet ist und/oder das die Stege (12) und/oder Rückhalteflügel (13) für jede der Kabelaufnahmeöffnungen (15) hinsichtlich Abmessungen und Dimensionierung und/oder Materialbeschaffenheit gleich gewählt oder individuell entsprechend dem Kabel (81, 82, 83) gewählt sind, für die die zugehörige Aufnahmeöffnung (15) vorgesehen ist.

5. Kabelführungsvorrichtung (1,1',1A,1B) nach einem der Ansprüche 1 - 4, **dadurch gekennzeichnet, dass** die Kabelführungsvorrichtung (1,1',1A,1B) zumindest teilweise aus Kunststoff gefertigt ist und/oder dass die Stege (12) und die Rückhalteflügel (13) aus unterschiedlichen Materialien gefertigt sind, wobei die Elastizität des Materials der Rückhalteflügel (13) grösser ist als die Elastizität des Materials der Stege (12).

6. Kabelführungsvorrichtung (1,1',1A,1B) nach einem der Ansprüche 1 - 5, **dadurch gekennzeichnet, dass** die Rückhalteflügel (13), die vorzugsweise eine nach aussen gerichtete Halterippe (139) aufweisen, einen Verschlussring (16), der eine Ringöffnung (169) und vorzugsweise eine nach innen gerichtete und zur Halterippe (139) korrespondierende Haltenut (169) aufweist, drehbar halten, sodass die Ringöffnung (164) wahlweise über eine der Segmentöffnungen (14) zwischen den Rückhalteflügeln (13) oder über einen der Rückhalteflügel (13) drehbar ist.

7. Kabelführungsvorrichtung (1,1',1A,1B) nach einem der Ansprüche 1 - 6, **dadurch gekennzeichnet, dass** zwei Vorrichtungselemente (E1, E2), welche die Merkmale einer Kabelführungsvorrichtung nach einem der Ansprüche 1 - 9 aufweisen, vorgesehen sind, die Rückhalteflügel (13) mit gleich langen oder ungleich langen Endstücken (131, 132) aufweisen und die gleichsinnig oder gegensinnig koaxial zueinander ausgerichtet und zwischen wenigstens einer ersten und einer zweiten Drehlage gegeneinander drehbar gehalten sind, so dass die Segmentöffnungen (14) in der ersten Drehlage nebeneinander liegen und dadurch geöffnet sind und in der zweiten Drehlage neben einem benachbarten Rückhalteflügel (13) liegen und dadurch verschlossen sind.

8. Kabelführungssystem (9) zur Führung mehrerer Kabel (81, 82, 83) mit zumindest einer Kabelführungsvorrichtung (1,1',1A,1B) nach einem der Ansprüche 1 - 7.

9. Kabelführungssystem (9) nach Anspruch 8, **dadurch gekennzeichnet, dass** mehrere Kabelführungsvorrichtungen (1,1',1A,1B) vorgesehen sind, die alle von einem Verbindungselement (2) oder die gruppenweise je von einem Verbindungselement (2), das vorzugsweise als Rohr oder Stab ausgestaltet und durch die Durchführöffnungen (11) geführt ist, miteinander mechanisch verbunden sind.

10. Kabelführungssystem (9) nach Anspruch 9, **dadurch gekennzeichnet, dass** das zumindest eine Verbindungselement (2) durch zumindest eine Halterung (3, 3') mit einer Wand, einer Decke, einer Montagevorrichtung oder dem Gehäuse einer Maschine verbunden ist und/oder dass in einer Trennwand (7) eines Gebäudes oder einer Vorrichtung oder in einem Montagerahmen (7) eine Durchtrittsöffnung (70) vorgesehen ist, in die wenigstens eine der Kabelführungsvorrichtungen (1) lösbar eingesetzt ist, deren Rückhalteflügel (13) durch entsprechende Formgebung oder Ankerelemente in der Durchtrittsöffnung (70) vorzugsweise verankerbar sind.

11. Kabelführungssystem (9) nach Anspruch 8, 9 oder 10, **dadurch gekennzeichnet, dass** der Abstand zwischen Kabelführungsvorrichtungen (1,1',1A,1B) im Durchschnitt zumindest 20cm, vorzugsweise zumindest 30cm, weiter bevorzugt zumindest 50cm und besonders bevorzugt zumindest 100cm beträgt.

## Claims

1. Cable routing device (1, 1', 1A, 1B) for the directional routing of cables (81, 82, 83), in particular for production areas in the beverage and / or food industry, with at least two webs (12) which are aligned radially to a central part (10) and one with the central part (10) connected first end piece (121) and a second end piece (122), on which a retaining wing (13) is provided which extends in the direction of the adjacent retaining wing (13), **characterized in that** the retaining wings (13) are at least approximately oriented along a circle, that is at least approximately concentric to the central part (10) and that each retaining wing (13) is formed in one piece onto the second end piece (122) of the corresponding web (12) and separated on both sides by a segment opening (14) by the webs (12) or the corresponding retaining wings (13) and that two neighbouring webs (12) and one or two retaining wings (13) delimit a cable receiving opening (15), destined to receive a cable (81, 82, 83) and that the segment opening (14) is formed in the form of a slit and preferably inclined with respect to the longitudinal axis (x) at an angle of around 30° - 60°, further preferred at around 45° and that the central part (10) presents a passage opening (11) for passing through connecting elements (2), by which several cable routing devices (1, 1', 1A, 1B) are connectable to each other, with sealing elements being provided neighbouring the receiving openings (15), which are formed as sealing ribs (111) and a sealing (112) formed onto it.

2. Cable routing device (1, 1', 1A, 1B) according to claim 1, **characterized in that** the end pieces (131, 132) of the retaining wings (13) extend from the associated web (12) with the same or different lengths on opposite sides and each with the associated end piece (132; 131) of the adjacent retaining wing (13) delimit a segment opening (14) .

3. Cable routing device (1, 1', 1A, 1B) according to one of the claims 1 or 2, **characterized in that** a holder (3), which can be mounted on a mounting body, such as a wall, a ceiling, a housing or a mounting device, with the cable routing device (1') is connected, which preferably has a spacer element (32) which is preferably integrally connected to one of the webs (12).

4. Cable routing device (1, 1', 1A, 1B) according to one of the claims 1 - 3, **characterized in that** the cable routing device (1), which is preferably coated with a coating, is at least approximately disk-shaped or rotor-shaped and / or that the webs (12) and / or retaining wings (13) for each of the cable receiving openings (15) is selected to be the same in terms of dimensions and dimensioning and / or material properties or is selected individually according to the cable (81, 82, 83) for which the associated receiving opening (15) is provided.

5. Cable routing device (1, 1', 1A, 1B) according to one of the claims 1 - 4, **characterized in that** the cable routing device (1, 1', 1A, 1B) is at least partially made of plastic and / or that the webs (12) and the retaining wings (13) are made of different materials, the elasticity of the material of the retaining wings (13) is greater than the elasticity of the material of the webs (12).

6. Cable routing device (1, 1', 1A, 1B) according to one of the claims 1 - 5, **characterized in that** the retaining wings (13), which preferably have an outwardly directed retaining rib (139), a locking ring (16) which has an annular opening (169) and preferably one after has inwardly directed retaining groove (169) corresponding to the retaining rib (139), so that the ring opening (164) can be rotated either via one of the segment openings (14) between the retaining wings (13) or via one of the retaining wings

7. Cable routing device (1, 1', 1A, 1B) according to one of the claims 1 - 6, **characterized in that** two device elements (E1, E2) which have the features of a cable routing device according to one of claims 1 to 6 are provided, the retaining wings (13) with the same length or end pieces (131, 132) of unequal length and which are coaxially aligned in the same direction or in opposite directions and are held so that they can rotate relative to one another between at least a first and a second rotational position, so that the segment openings (14) lie next to one another in the first rotational position and are thereby opened and in the second rotational position lie next to an adjacent retaining wing (13) and are thereby closed.

8. Cable routing system (9) for routing several cables (81, 82, 83) with at least one cable routing device (1; 1'; 1A; 1B) according to one of the claims 1 - 7.

9. Cable routing system (9) according to claim 8, **characterized in that** a plurality of cable routing devices (1, 1', 1A, 1B) are provided, all of them by a connecting element (2) or in groups by a connecting element (2), which is preferably designed as a tube or rod and guided through the feed-through openings (11), are mechanically connected to one another.

10. Cable routing system (9) according to claim 9, **characterized in that** the at least one connecting element (2) is connected to a wall, a ceiling, a mounting device or the housing of a machine by at least one holder (3, 3 ') and / or that in a partition (7) of a building or a device or in a mounting frame (7) a passage opening (70) is provided, into which at least one of the cable guide devices (1) is detachably inserted, the retaining wing (13) of which by appropriate shaping or anchor elements can preferably be anchored in the passage opening (70).

11. Cable routing system (9) according to claim 8, 9 o 10, **characterized in that** the distance between cable routing devices (1) is on average at least 20 cm, preferably at least 30 cm, more preferably at least 50 cm and particularly preferably at least 100 cm.

## Revendications

1. Dispositif d'acheminement de câbles (1, 1', 1A, 1B) pour l'acheminement directionnel de câbles (81, 82, 83), en particulier pour les zones de production dans l'industrie des boissons et/ou alimentaire, avec au moins deux nervures (12) qui sont alignées radialement sur une partie centrale (10) et l' autre avec la partie centrale (10) première pièce d'extrémité est reliée (121) et une seconde pièce d'extrémité (122), sur laquelle une aile de retenue (13) est prévu , qui se prolonge dans la direction de l'aile de retenue adjacent (13), c**aractérisé en ce que** les ailes de retenue (13) sont au moins approximativement orientés le long d'un cercle, qui est au moins à peu près concentrique à la partie centrale (10) et que chaque aile de retenue (13) et formé en une pièce sur la seconde pièce d'extrémité (122) de la nervure correspondante (12) et séparé des deux côtés d'une ouverture de segment (14) des ailes de retenues (13) voisinant et que deux nervures (12) voisinant et un ou deux ailes de retenue (13) correspondants délimitent une ouverture pour câble (15), qui est prévu à la réception d'un câble (81, 82, 83) et que l'ouverture de segment (14) est conçu en forme de fente et incliné par rapport à l'axe longitudinal (x) du dispositif d'acheminement de câbles (1, 1', 1A, 1B) d'un angle de préférence entre 30°-60°, plus préféré environ 45° et que la partie centrale (10) présente une ouverture de passage (11) pour le passage d'un élément de connexion (2), par lequel plusieurs dispositif d'acheminement de câbles (1, 1', 1A, 1B) sont connectables, voisinant aux ouvertures pour câble (15) étant prévu des éléments d'étanchéité, conçu en forme de rainure d'étanchéité (111) ou d'une bride moulé sur le joint (112).

2. Dispositif d'acheminement de câbles (1, 1', 1A, 1B) selon la revendication 1, **caractérisé en ce que** les pièces d'extrémité (131, 132) des ailes de retenue (13) s'étendent à partir de l'âme associée (12) avec des longueurs identiques ou différentes en regard et chacun des côtés de la pièce d'extrémité associée (132; 131) de l'aile de retenue adjacent (13) délimitent une ouverture de segment (14) .

3. Dispositif d'acheminement de câbles (1, 1', 1A, 1B) selon la revendication 1 ou 2, **caractérisé en ce qu'**un support (3), qui peut être monté sur un corps de montage, tel qu'un mur, un plafond, un boîtier ou un dispositif de montage, avec le dispositif d' acheminement de câbles (1' ) est raccordé, qui présente de préférence un élément d'espacement (32) qui est de préférence relié d'un seul tenant à l' une des bandes (12).

4. Dispositif d'acheminement de câbles (1, 1', 1A, 1B) selon une des revendications 1 - 3, **caractérisé en ce que** le dispositif d'acheminement de câbles (1), qui est de préférence revêtu d'un revêtement, est au moins approximativement en forme de disque ou de rotor et/ou que le des nervures (12) et / ou des ailes de retenue (13) pour chacune des ouvertures de réception de câble (15) est choisie pour être la même en termes de dimensions et de dimensionnement et / ou les propriétés du matériau ou est choisi individuellement selon le câble (81, 82, 83) pour laquelle est prévue l'ouverture de réception (15) associée.

5. Dispositif d'acheminement de câbles (1, 1', 1A, 1B) selon une des revendications 1 - 4, **caractérisé en ce que** le dispositif d'acheminement de câbles (1, 1', 1A, 1B) est au moins partiellement en matière plastique et/ou que les nervures (12) et les ailes de retenue (13) sont constituées de matériaux différents, l'l'élasticité de la matière des ailes de retenue (13) est supérieure à l'élasticité du matériau des bandes (12).

6. Dispositif d'acheminement de câbles (1, 1', 1A, 1B) selon une des revendications 1 - 5, **caractérisé en ce que** les ailes de retenue (13), qui présentent de préférence une nervure de retenue dirigée vers l'extérieur (139), une bague de verrouillage (16) qui présente une ouverture annulaire (169 ) et de préférence l' un après a intérieurement rainure de retenue orientée (169) correspondant à la nervure de retenue (139), de sorte que l'ouverture annulaire (164) peut être mis en rotation soit par l' une des ouvertures de segment (14) entre les ailes de retenue (13) soit par l'une des ailes de retenue (13).

7. Dispositif d'acheminement de câbles (1, 1', 1A, 1B) selon une des revendications 1 - 6, **caractérisé en ce que** sont prévus deux éléments de dispositif (E1, E2) qui présentent les caractéristiques d'un dispositif passe-câbles selon l'une des revendications 1 à 9, les ailettes de maintien ( 13) avec la même longueur ou des morceaux de fin (131, 132) de longueurs inégales et qui sont alignés de manière coaxiale dans la même direction ou dans des directions opposées et sont maintenues de manière à pouvoir pivoter entre au moins une première et une seconde position de rotation de telle sorte que les ouvertures de segment (14) se trouvent à côté de l'autre dans la première position de rotation et sont ainsi ouvertes et dans la deuxième position de rotation se trouvent à côté d'une aile de retenue adjacent (13) et sont ainsi fermés.

8. Système d'acheminement de câbles (9) pour acheminer plusieurs câbles (81, 82, 83) avec au moins un dispositif de passe-câbles (1; 1'; 1A; 1B) selon une des revendications 1 - 7.

9. Système d'acheminement de câbles (9) selon la revendication 8, **caractérisé en ce que** plusieurs dispositifs d'acheminement de câbles (1, 1', 1A, 1B) sont prévus qui proviennent tous d'un élément de connexion (2) ou en groupe à partir d' un élément de liaison (2), qui est de préférence réalisé sous la forme d' un tube ou d'une tige et guidé à travers la traversée des ouvertures (11), sont reliés mécaniquement les uns aux autres.

10. Système d'acheminement de câbles (9) selon la revendication 9, **caractérisé en ce que** le au moins un élément de raccordement (2) est relié à un mur, un plafond, un dispositif de montage ou le boîtier d'une machine par au moins un support (3 , 3 « ) et / ou que , dans une cloison (7) d'un immeuble ou d' un dispositif ou dans un cadre de montage (7) une ouverture de passage (70) est prévu, dans lequel au moins l' un des dispositifs de guidage de câble (1) est inséré de façon amovible, l'aile de retenue (13) qui par des éléments de mise en forme appropriés ou d' ancrage peut de préférence être ancré dans l'ouverture de passage (70).

11. Système d'acheminement de câbles (9) selon la revendication 8, 9 ou 10, **caractérisé en ce que** la distance entre les dispositifs d'acheminement de câbles (1, 1', 1A, 1B) est en moyenne d'au moins 20 cm, de préférence d'au moins 30 cm, plus préférentiellement d'au moins 50 cm et de manière particulièrement préférée au moins 100cm.
